# EUROPÄISCHE PATENTANMELDUNG

(11) **EP 4 481 259 A1**
(43) Veröffentlichungstag der Anmeldung: **25.12.2024**
(21) Anmeldenummer: 23181052.4
(22) Anmeldetag: 22.06.2023
(51) Int. Cl.: F16P 3/12

(54) **ÜBERWACHUNGSVORRICHTUNG**

(71) Anmelder: Leuze electronic GmbH + Co. KG, 73277 Owen/Teck (DE)
(72) Erfinder: Feller, Bernhard, 86316 Friedberg (DE); Schreiber, Frank, 72574 Bad Urach (DE); Haberer, Hermann, 81379 München (DE); Koperski, Joachim, 85521 Ottobrunn (DE); Wursthorn, Viktor, 72636 Frickenhausen (DE); Eckhardt, Hasko, 72076 Tübingen (DE)
(74) Vertreter: Ruckh, Rainer Gerhard

(57) **Zusammenfassung**

Die Erfindung betrifft eine Überwachungseinrichtung (1) mit einem Sicherheitssensor (4), der zur Durchführung einer Schutzfeldüberwachung ausgebildet ist. Zur Konfiguration von Schutzfeldern (7) für die mit dem Sicherheitssensor (4) durchgeführte Schutzfeldüberwachung ist eine Konfigurationseinheit (8) vorgesehen. Die Konfigurationseinheit (8) weist eine grafische Zeichenoberfläche (22) auf, in die eine grafische Information eines Gefahrenbereichs (2), innerhalb dessen ein Schutzfeld (7) konfiguriert werden soll, eingeblendet wird. Elemente der grafischen Information werden für die Konfiguration des Schutzfelds (7) verwendet.

## Beschreibung

Die Erfindung betrifft eine Überwachungsvorrichtung.

Derartige Überwachungsvorrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich, insbesondere der Gefahrenbereich, abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich, d.h. Gefahrenbereich, sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet.

Dieses Objektfeststellungsignal wird an eine Steuerung ausgegeben, die die Anlage steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu verhindern.

Abhängig von der jeweiligen Applikation oder auch abhängig vom Betriebszustand der Anlage kann es erforderlich sein, die Gefahrenbereichsüberwachung anzupassen. Dies wird dadurch erreicht, dass im optischen Sensor unterschiedliche Schutzfelder abgespeichert sind, wobei je nach Anforderung das am besten geeignete Schutzfeld aktiviert wird.

Zur Konfiguration von Schutzfeldern ist es bekannt, Konfigurationseinheiten einzusetzen, die an den Sicherheitssensor angeschlossen werden. Die Konfiguration von Schutzfeldern erfolgt in einem Konfigurationsbetrieb, der von einem Arbeitsbetrieb, in dem der Sicherheitssensor die Schutzfeldüberwachung durchführt, getrennt ist.

Prinzipiell können für die Berechnung von Schutzfeldern, insbesondere deren Konturen, Messdaten des Sicherheitssensors verwendet werden. Ist während des Konfigurationsbetriebs der Sicherheitssensor offline, stehen diese Messwerte jedoch nicht zur Verfügung. Zudem reichen die Messwerte des Sicherheitssensors für eine Konfiguration von Schutzfeldern allein nicht aus. Gefahrenstellen innerhalb des Gefahrenbereichs muss ein Benutzer explizit durch Benutzereingaben in die Konfigurationseinheit vorgeben. Zudem müssen im Gefahrenbereich vorhandene Umgebungsbedingungen, wie z.B. Schutzzäune, Raumbegrenzungen oder Maschinenteile berücksichtigt werden.

All diese geometrischen Randbedingungen muss ein Benutzer durch manuelle Eingaben in die Konfigurationseinheit bei der Konfiguration von Schutzfeldern berücksichtigen. Diese Vorgänge sind nicht nur zeitraubend, sondern auch fehlerträchtig.

Der Erfindung liegt die Aufgabe zugrunde, bei einer Überwachungseinrichtung der eingangs genannten Art eine benutzerfreundliche und gleichzeitig sichere Konfiguration von Schutzfeldern zu ermöglichen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor, der zur Durchführung einer Schutzfeldüberwachung ausgebildet ist. Zur Konfiguration von Schutzfeldern für die mit dem Sicherheitssensor durchgeführte Schutzfeldüberwachung ist eine Konfigurationseinheit vorgesehen. Die Konfigurationseinheit weist eine grafische Zeichenoberfläche auf, in die eine grafische Information eines Gefahrenbereichs, innerhalb dessen ein Schutzfeld konfiguriert werden soll, eingeblendet wird. Elemente der grafischen Information werden für die Konfiguration des Schutzfelds verwendet.

Die Erfindung betrifft weiterhin ein Verfahren zum Betrieb einer Überwachungseinrichtung.

In einem Arbeitsbetrieb des Sicherheitssensors führt dieser eine Schutzfeldüberwachung durch und sichert so einen Gefahrenbereich an einer Anlage ab, wobei der Begriff Anlage generell auch Maschinen, Fahrzeuge, Roboter und dergleichen umfasst.

Der Sicherheitssensor kann prinzipiell als Radarsensor oder Ultraschallsensor ausgebildet sein. Vorteilhaft ist der Sicherheitssensor ein optischer Sensor. Dabei kann der optische Sensor ein Flächendistanzsensor sein, mit dem ein flächiger Überwachungsbereich überwacht wird. Dementsprechend bilden auch die Schutzfelder für diesen Flächendistanzsensor flächige, zweidimensionale Bereiche. Alternativ kann der optische Sensor ein Kamerasensor sein, mit dem ein dreidimensionaler Bereich überwacht werden kann. Prinzipiell können damit auch dreidimensionale Schutzfelder überwacht werden. Vorteilhaft sind auch in diesem Fall die Schutzfelder zweidimensionale Bereiche.

Der Sicherheitssensor weist generell eine Auswerteeinheit auf, in der Sensorsignale von Sensorkomponenten des Sicherheitssensors ausgewertet werden. Dabei erfolgt generell eine Schutzfeldüberwachung derart, dass in der Auswerteeinheit überprüft wird, ob in einem aktivierten Schutzfeld des Sicherheitssensors ein Objekt vorhanden ist oder nicht. Abhängig hiervon generiert die Auswerteeinheit als Objektfeststellungssignal ein binäres Schaltsignal dessen Schaltzustände angeben, ob sich ein Objekt im Schutzfeld befindet oder nicht. Ein Objekt im Schutzfeld wird als Gefahrenzustand klassifiziert, so dass das entsprechende Schaltsignal eine Sicherheitsfunktion auslöst, die die überwachte Anlage in einen sicheren Zustand überführt, insbesondere diese stillsetzt.

Zur Erfüllung der Anforderungen für einen Einsatz des Sicherheitssensors in sicherheitstechnischen Applikationen weist die Auswerteeinheit einen fehlersicheren Aufbau auf. Dies wird beispielsweise dadurch realisiert, dass die Auswerteeinheit aus zwei sich gegenseitig überwachenden Rechnereinheiten besteht.

Im Sicherheitssensor, insbesondere in dessen Auswerteeinheit, kann im einfachsten Fall nur ein Schutzfeld abgespeichert sein. Dann erfolgt während des Arbeitsbetriebs die Schutzfeldüberwachung stets mit dem gleichen Schutzfeld. Alternativ können im Sicherheitssensor mehrere Schutzfelder abgespeichert sein. Dann können zur Schutzfeldüberwachung je nach Applikationsbedingungen unterschiedliche Schutzfelder aktiviert sein.

Das oder die Schutzfelder bilden vorteilhaft geeignete Teilbereiche eines Gefahrenbereichs an einer Anlage, die mit dem Sicherheitssensor überwacht wird.

In jedem Fall ist es erforderlich, das oder die Schutzfelder an die jeweiligen Gegebenheiten des Gefahrenbereichs anzupassen. Hierzu werden die Schutzfelder in einem, vorzugsweise vom Arbeitsbetrieb getrennten, Konfigurationsbetrieb konfiguriert.

Hierzu wird eine Konfigurationseinheit an den Sicherheitssensor angeschlossen. Der Anschluss erfolgt vorteilhaft mittels einer bidirektionalen, fehlersicheren Datenverbindung, wie z.B. einem sicheren Bussystem, wie z.B. PROFIsafe, CIPsafety oder FSoE. Die Daten werden über das Bussystem mittels eines sicheren Busprotokolls übertragen.

Die Konfigurationseinheit weist einen Rechner auf, wie z.B. einen PC. Die Konfigurationseinheit weist weiterhin eine grafische Zeichenoberfläche auf, in der ein Benutzer durch Eingaben das jeweilige Schutzfeld grafikunterstützt konfigurieren kann.

Erfindungsgemäß wird in die grafische Zeichenoberfläche eine grafische Information des zu überwachenden Gefahrenbereichs eingebunden, d.h. eingeblendet. Generell kann ein kompletter Gefahrenbereich oder nur ein relevanter Teil des Gefahrenbereichs eingeblendet werden.

Ein Benutzer erhält somit eine grafische Vorgabe des Orts und der Gestalt des Gefahrenbereichs, innerhalb dessen das jeweilige Schutzfeld zu konfigurieren ist.

Wesentlich hierbei ist, dass der Gefahrenbereich durch die grafische Information naturgetreu, vorzugsweise maßstäblich dargestellt wird. Innerhalb dieser Darstellung kann der Benutzer leicht und einfach durch geeignete Eingaben des Schutzfelds konfigurieren und dabei die tatsächlichen räumlichen Gegebenheiten des Gefahrenbereichs berücksichtigen. Dadurch wird auf einfache Weise eine exakte Anpassung des Schutzfelds an den Gefahrenbereich, insbesondere auch an dort vorhandene Gegenstände wie Schutzzäune, Raumbegrenzungen, Maschinenteile und dergleichen, ermöglicht.

Durch die dargestellte grafische Information erhält der Benutzer eine grafische Information über den Gefahrenbereich, die es dem Benutzer ermöglicht, schnell und intuitiv ein Schutzfeld zu definieren. Teile der dargestellten grafischen Information können dabei vom Benutzer zur Definition des Schutzfelds verwendet werden, was eine erhebliche Vereinfachung darstellt.

Die in die grafische Zeichenoberfläche eingeblendete grafische Information kann gemäß einer ersten Ausgestaltung eine CAD-Darstellung sein.

Vorteilhaft handelt es sich bei der CAD-Darstellung um eine CAD-Zeichnung, also eine zweidimensionale Darstellung des Gefahrenbereichs. Diese Darstellung eignet sich zur Konfiguration von flächigen, zweidimensionalen Schutzfeldern. Prinzipiell kann dann, wenn die grafische Zeichenoberfläche 3D-tauglich ist, auch eine 3D-CAD-Darstellung in die grafische Zeichenoberfläche eingeblendet werden. In diesem Fall kann die grafische Information nicht nur zur Konfiguration zweidimensionaler Schutzfelder, sondern auch zur Konfiguration dreidimensionaler Schutzfelder genutzt werden.

Gemäß einer zweiten Variante ist die grafische Information ein Foto des Gefahrenbereichs.

Dieses Foto ist eine zweidimensionale Darstellung, so dass sich diese zur Konfiguration zweidimensionaler Schutzfelder eignet.

Gemäß einer vorteilhaften Ausgestaltung ist die grafische Information maßstabsgetreu.

Dies kann insbesondere bei grafischen Informationen in Form von CAD-Darstellungen der Fall sein. Bei grafischen Informationen in Form von Fotos ist eine maßstabsgetreue Wiedergabe nur bei geeigneten Perspektiven, aus welchen das Foto gemacht wurde, gegeben, beispielsweise dann, wenn der Gefahrenbereich exakt von oben in einer Draufsicht fotografiert wird.

In einer maßstabsgetreuen grafischen Information kann ein Benutzer unter Verwendung der grafischen Information, insbesondere von dort vorhandenen geometrischen Merkmalen, das Schutzfeld grafisch vorgeben und so konfigurieren. Da die grafische Information des Gefahrenbereichs maßstabsgetreu ist, kann der Benutzer so einfach das Schutzfeld an die realen Gegebenheiten des Gefahrenbereichs angepasst definieren.

Bei nicht maßstabsgetreuen grafischen Informationen ist die Darstellung des Gefahrenbereichs verzerrt. Bei einer verzerrten grafischen Information sind Markierungen vorteilhaft Maßstäbe enthalten, anhand derer in der Konfigurationseinheit eine Entzerrung der grafischen Information erfolgt.

Anhand der Markierungen und der zugeordneten Maßstäbe kann die grafische Information entzerrt werden, so dass wieder eine maßstabsgetreue Darstellung des Gefahrenbereichs erhalten wird. Anhand dieser maßstabsgetreuen Darstellung des Gefahrenbereichs kann der Benutzer wieder, ebenfalls maßstabsgetreu, das Schutzfeld geometrisch konfigurieren.

Besonders vorteilhaft ist die grafische Information maßstabsgetreu mit Markierungen der Raumachsen gekennzeichnet, anhand derer die verzerrte grafische Information in eine grafische Darstellung in einer Ebene umgerechnet wird.

Dies ermöglicht eine einfache und genaue Entzerrung der verzerrten grafischen Informationen.

Gemäß einer besonders vorteilhaften Ausführungsform der Erfindung werden an der grafischen Zeichenoberfläche Elemente der grafischen Information markiert, wobei markierte Elemente als Schutzfeld-Konturelemente übernommen, oder aus markierten Elementen Schutzfeld-Konturelemente berechnet werden.

In einer anderen Ausführung erfolgt keine Entzerrung der eingeblendeten grafischen Darstellung, sondern die Entzerrung wird bei der Berechnung der Schutzfeldkonturen berücksichtigt. Zur Einblendung der Schutzfeldkontur in die grafische Darstellung werden die berechneten/ermittelten Schutzfeldkonturen so verzerrt, dass diese der Verzerrung der eingeblendeten grafischen Informationen entsprechen und damit dort so eingeblendet werden können, dass dem Anwender eine geeignete Vorstellung der Schutzfeldkontur vermittelt wird.

Dies bedeutet, dass in der grafischen Information enthaltene Bildinformationen über den Gefahrenbereich direkt als Schutzfeld-Elemente, d.h. Schutzfeld-Konturelemente, übernommen werden oder, insbesondere durch geeignete Berechnungsvorschriften, die in der Konfigurationseinheit hinterlegt sind, berechnet werden können.

Dies führt zu einer wesentlichen Erleichterung bei der Konfiguration eines Schutzfelds, da der Benutzer die Schutzfeld-Kontur nicht frei einzeichnen muss, was einerseits zu Ungenauigkeiten führt und zudem fehlerträchtig ist. Vielmehr liefert die grafische Information exakte, maßstabsgetreue Bildinformationen, die direkt zur Vorgabe eines Schutzfelds benutzt werden können.

Beispielsweise können in einer grafischen Information in Form einer CAD-Darstellung Linienelemente markiert werden und zur Ausbildung von Schutzfeldkonturvorschlägen dienen.

Weiterhin können in einer grafischen Information in Form eines Fotos Kontrastkanten markiert werden und zur Ausbildung von Schutzfeldkonturvorschlägen dienen.

Im einfachsten Fall werden aus den markierten Linienelementen einer CAD-Darstellung oder aus markierten Kontrastkanten in einem Foto Geraden gebildet, die als Bestandteile einer Schutzfeld-Kontur verwendet werden können.

Weiterhin ist es möglich, dass aus markierten Elementen Polygonzüge und/oder Stützstellen berechnet werden, die zur Berechnung von Schutzfeld-Konturelementen dienen oder Schutzfeld-Konturelemente bilden.

Der Ablauf der Konfiguration eines Schutzfelds ist derart, dass anhand von Schutzfeld-Konturelementen ein Schutzfeldkonturvorschlag berechnet wird, der an der grafischen Zeichenoberfläche angezeigt wird.

Für den Fall, dass während des Konfigurationsbetriebs eine online-Verbindung zwischen dem Sicherheitssensor und der Konfigurationseinheit gegeben ist, können zudem zur Berechnung eines Schutzfeldkonturvorschlags Messdaten des Sicherheitssensors verwendet werden.

Eine fertiggestellte Schutzfeld-Kontur wird dann auf der grafischen Zeichenoberfläche angezeigt. Ein Benutzer kann dann noch Änderungen oder Korrekturen der Schutzfeld-Kontur vornehmen.

Ist die Schutzfeld-Kontur endgültig fertiggestellt, bestätigt dies der Benutzer durch eine entsprechende Eingabe und die Schutzfeld-Kontur wird von der Konfigurationseinheit in den Sicherheitssensor geladen.

Durch die geprüfte Einstellung des Schutzfelds und die fehlersichere Übertragung des Schutzfelds von der Konfigurationseinheit in den Sicherheitssensor, wird das Schutzfeld fehlersicher im Sicherheitssensor generiert.

Die Erfindung wird im Folgenden anhand der Zeichnungen erläutert. Es zeigen:
- Figur 1:: Ausführungsbeispiel der erfindungsgemäßen Überwachungseinrichtung.
- Figur 2:: Sicherheitssensor der Überwachungseinrichtung gemäß Figur 1 mit einer Konfigurationseinheit.
- Figur 3:: Erstes Beispiel eines Sicherheitssensors in Form eines Flächendistanzsensors.
- Figur 4:: Zweites Beispiel eines Sicherheitssensors in Form eines Flächendistanzsensors.
- Figur 5:: Beispiel eines Sicherheitssensors in Form eines Kamerasensors.
- Figur 6:: Erstes Ausführungsbeispiel der grafischen Zeichenoberfläche mit einer eingeblendeten CAD-Darstellung.
- Figur 7:: Zweites Ausführungsbeispiel der grafischen Zeichenoberfläche mit einem eingeblendeten Foto.
- Figur 8:: Drittes Ausführungsbeispiel der grafischen Zeichenoberfläche mit einem eingeblendeten Foto.

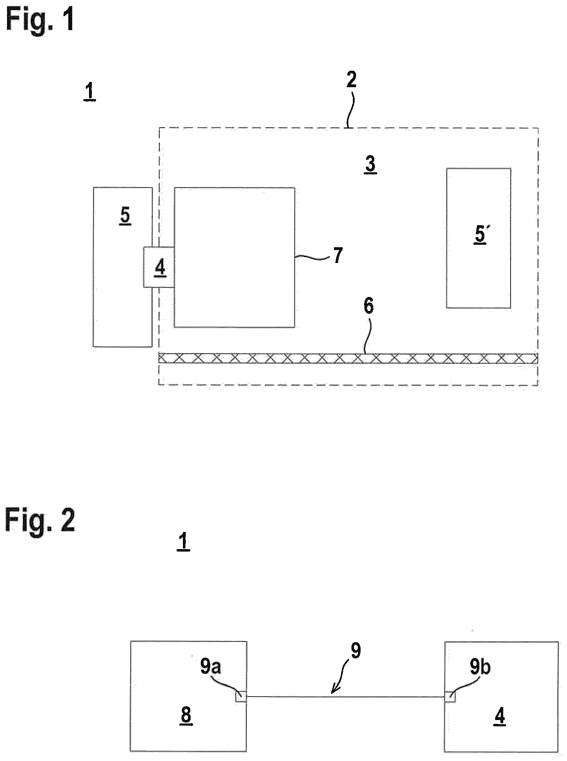

Figur 1 zeigt schematisch ein Ausführungsbeispiel der erfindungsgemäßen Überwachungseinrichtung 1. Die Überwachungseinrichtung 1 dient zur Überwachung eines Gefahrenbereichs 2 an einer Anlage 3. Für diese Überwachung wird als Bestandteil der Überwachungseinrichtung 1 ein Sicherheitssensor 4 eingesetzt. Der Sicherheitssensor 4 ist an einer Maschine 5 montiert, der Bestandteil der Anlage 3 ist. Im Gefahrenbereich 2 befinden sich eine weitere Maschine 5' und ein Schutzzaun 6. Natürlich sind auch andere Ausbildungen einer Anlage 3 möglich.

Mit dem Sicherheitssensor 4 wird eine Schutzfeldüberwachung durchgeführt. Im Sicherheitssensor 4 wird hierzu ein Schutzfeld 7 aktiviert, das einen Teil des Gefahrenbereichs 2 abdeckt. Wird mit dem Sicherheitssensor 4 ein Objekt O im Schutzfeld 7 detektiert, wird dies als Gefahrenzustand gewertet und es wird eine Sicherheitsfunktion ausgelöst, beispielsweise die Anlage 3 oder Teile hiervon stillgesetzt. Generell können im Sicherheitssensor 4 auch mehrere Schutzfelder 7 gespeichert sein, so dass, je nach aktueller Applikationsbedingung, unterschiedliche Schutzfelder 7 aktiviert werden können.

Zur Konfiguration von Schutzfeldern 7 für den Sicherheitssensor 4 ist eine Konfigurationseinheit 8 vorgesehen (Figur 2). Die Konfigurationseinheit 8 ist über eine bidirektionale Datenverbindung 9 mit dem Sicherheitssensor 4 verbunden, wobei der Sicherheitssensor 4 und die Konfigurationseinheit 8 hierfür geeignete Schnittstellenmodule 9a, 9b aufweisen. Die Datenübertragung über die Datenverbindung 9 erfolgt vorteilhaft fehlersicher. Beispielsweise ist die Datenverbindung 9 von einem sicheren Bussystem gebildet.

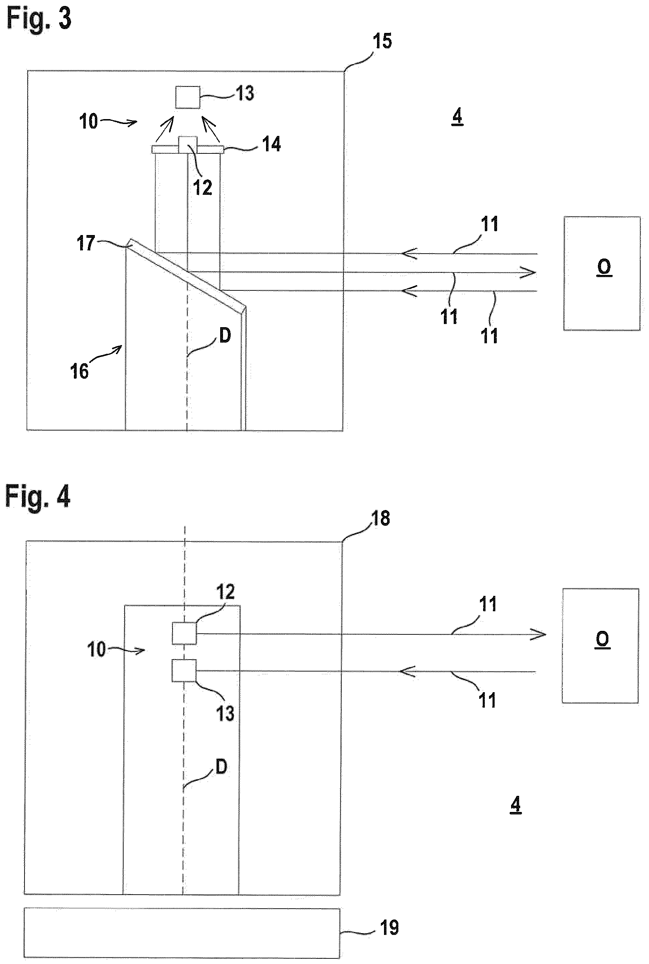

Figur 3 zeigt ein erstes Ausführungsbeispiel des Sicherheitssensors 4 in Form eines optischen Sensors, der im vorliegenden Fall in Form eines Flächendistanzsensors ausgebildet ist.

Der optische Sensor weist mindestens eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt O zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Alternativ können Distanzmessungen nach einem Phasenmessverfahren durchgeführt werden.

Figur 4 zeigt eine zweite Ausführungsform des optischen Sensors. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich. Ansonsten entspricht der optische Sensor gemäß Figur 4 der Ausführungsform gemäß Figur 3.

Mit dem Sicherheitssensor 4 in Form des Flächendistanzsensors wird ein zweidimensionaler Erfassungsbereich erfasst. Dementsprechend erfolgt mit dem Sicherheitssensor 4 eine Schutzfeldüberwachung in zweidimensionalen Schutzfeldern 7.

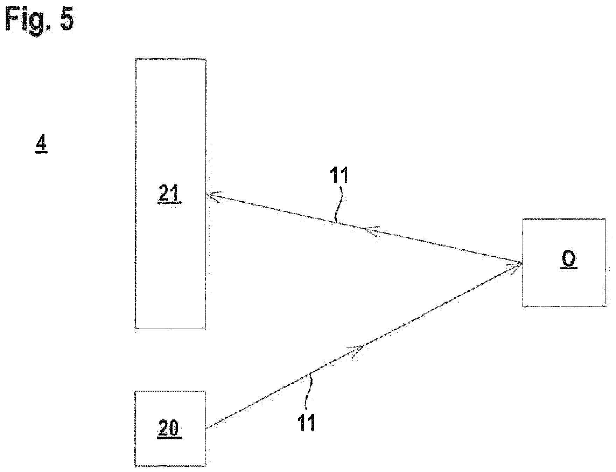

Figur 5 zeigt ein Ausführungsbeispiel des Sicherheitssensors 4 in Form eines Kamerasensors. Dieser Kamerasensor weist eine Lichtstrahlen 11 emittierende Sendeeinheit 20 und eine Empfangseinheit 21 in Form eines Bildsensors mit einer matrixförmigen Anordnung von Empfangselementen auf. Der Bildsensor kann von einem CMOS- oder CCD-Array gebildet sein. Auch in diesem Fall erfolgt mit den Lichtstrahlen 11 eine Distanzmessung, insbesondere nach einem Impuls-Laufzeit-Verfahren.

Mit dem Kamerasensor erfolgt eine Objekterfassung in einem dreidimensionalen Erfassungsbereich. Dementsprechend können die Schutzfelder 7 zwei- oder dreidimensionale Bereiche bilden.

Der Sicherheitssensor 4 weist eine Auswerteeinheit auf, in welcher die Empfangssignale des Empfängers 13 bzw. der Empfangseinheit 21 ausgewertet werden. Die Auswerteeinheit weist einen fehlersicheren Aufbau auf. Beispielsweise besteht die Auswerteeinheit aus zwei sich gegenseitig zyklisch überwachenden Rechnereinheiten.

Mit dem Sicherheitssensor 4 wird eine Schutzfeldüberwachung durchgeführt. Dabei wird mit dem Sicherheitssensor 4 festgestellt, ob ein Objekt O, insbesondere ein sicherheitskritisches Objekt O, im Schutzfeld 7 vorhanden ist oder nicht. Abhängig hiervon generiert der Sicherheitssensor 4 als Objektfeststellungssignal ein binäres Schaltsignal, dessen Schaltzustände angeben, ob sich ein Objekt O im Schutzfeld 7 befindet oder nicht. Wird mit dem Sicherheitssensor 4 ein Objekt O im Schutzfeld 7 detektiert, entspricht dies einem Gefahrenzustand. Mit dem dadurch generierten Schaltsignal, das über einen Ausgang des Sicherheitssensors 4 ausgegeben wird, wird eine Sicherheitsfunktion der Anlage ausgelöst die beispielsweise darin besteht, die Anlage 3 stillzusetzen.

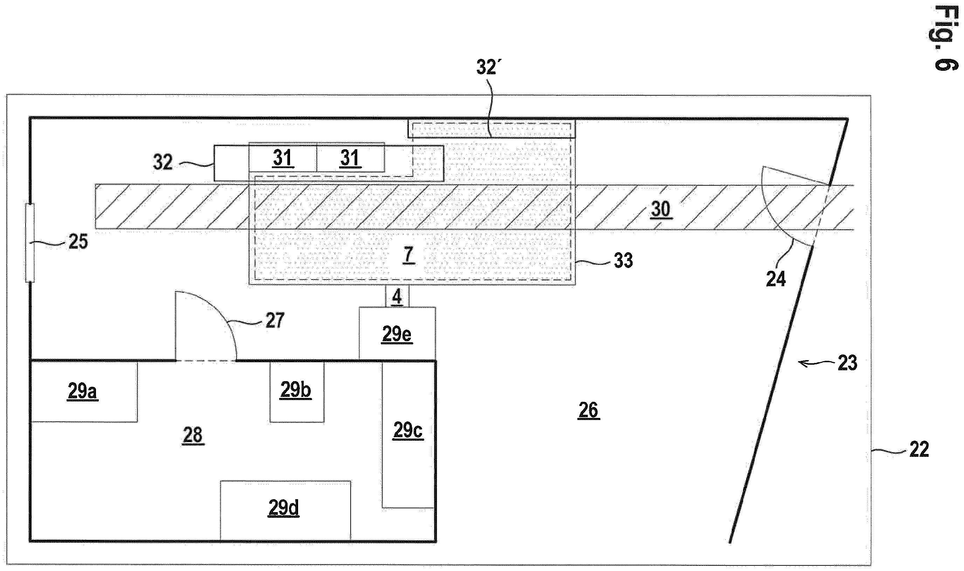

Die Beispiele der Figuren 6 bis 8 veranschaulichen die erfindungsgemäße Funktionsweise der Überwachungseinrichtung 1 und das erfindungsgemäße Verfahren zur Konfiguration von Schutzfeldern 7.

Die Konfigurationseinheit 8 weist eine grafische Zeichenoberfläche 22 auf, auf der erfindungsgemäß grafische Informationen des Gefahrenbereichs 2 dargestellt werden, anhand derer ein Benutzer durch Eingaben an der Konfigurationseinheit 8 ein Schutzfeld 7 konfigurieren kann.

Bei dem Beispiel gemäß Figur 6 ist die grafische Information von einer CAD-Zeichnung gebildet, die maßstabsgetreu an der grafischen Zeichenoberfläche 22 dargestellt wird.

Auf der CAD-Zeichnung ist ein geschlossener Gefahrenbereich 2 in Form einer Halle 23 vorgesehen, die eine Tür 24 und einen Notausgang 25 aufweist. In der Halle 23 befindet sich ein Labor 26 und ein mit einer weiteren Tür 27 verschließbarer Arbeitsraum 28 mit Bearbeitungsmaschinen 29a-29d. In der Halle 23 verläuft eine Fördereinrichtung 30, die an Schränken 31 vorbeiführt. An einer weiteren Bearbeitungsmaschine 29e befindet sich der Sicherheitssensor 4.

Der Benutzer kann in der CAD-Zeichnung vorhandene Linien durch Bereichsmarkierungen 32, 32' kennzeichnen. Weiterhin kann der Benutzer zur Vorgabe einer Schutzfeld-Kontur Hilfslinien 33 markieren.

Aus den mit den Bereichsmarkierungen 32, 32' gekennzeichneten Linien der CAD-Zeichnung können Schutzfeld-Konturelemente abgeleitet werden. Dies kann direkt durch Übernahme der Linien aus der CAD-Zeichnung erfolgen. Alternativ können aus den Linien Polygonzüge oder Stützstellen berechnet werden, aus denen wiederum Schutzfeld-Konturelemente berechnet werden. Entsprechendes gilt für die Hilfslinien 33.

Aus den Schutzfeld-Konturelementen, ggf. in Verbindung mit Messwerten des Sicherheitssensors 4, falls dieser während des Konfigurationsbetriebs online mit der Konfigurationseinheit 8 verbunden ist, wird ein Schutzfeldkonturvorschlag berechnet. Dieser Schutzfeldkonturvorschlag mit dem entsprechenden Schutzfeld 7 wird dem Benutzer auf der grafischen Zeichenoberfläche angezeigt.

Wie Figur 6 zeigt, ist das so berechnete Schutzfeld 7 an die Gegebenheiten des Gefahrenbereichs 2 angepasst, wobei insbesondere gewährleistet ist, dass keine stationären Gegenstände im Schutzfeld 7 vorhanden sind, so dass diese keine Objektmeldung im Sicherheitssensor 4 bei der Schutzfeldüberwachung auslösen.

Der Benutzer kann den Schutzfeldkonturvorschlag noch ändern oder korrigieren. Ist dann das Schutzfeld 7 endgültig fertiggestellt, wird dieses über die Datenverbindung 9 in den Sicherheitssensor 4 geladen und kann dort von Sicherheitssensoren 4 zur Schutzfeldüberwachung verwendet werden.

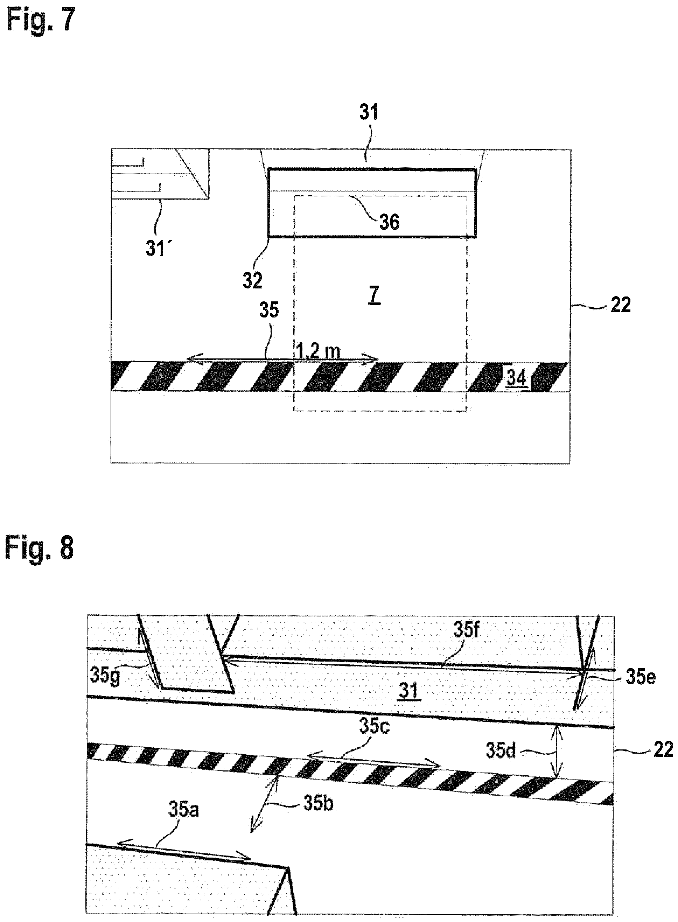

Figur 7 zeigt ein Beispiel, bei welchem als grafische Information ein Foto des Gefahrenbereichs 2 in die grafische Zeichenoberfläche 22 eingeblendet ist.

Im vorliegenden Fall zeigt das Foto eine maßstabsgetreue Darstellung des Gefahrenbereichs 2.

Wie Figur 7 zeigt, sind im Gefahrenbereich 2 wieder Schränke 31, 3 1' vorhanden, die bei einem zu konfigurierenden Schutzfeld 7 ausgespart werden sollen.

Auf dem Boden des Gefahrenbereichs 2 befindet sich ein Markierungsstreifen 34. In dem Foto ist an diesem Markierungsstreifen 34 eine Maßstabsangabe 35 in Form eines Doppelpfeils mit der Distanzangabe 1,2 m enthalten, die maßstabsgetreu ist. Alternativ kann dieses Maß auch vom Bediener abgemessen und als Maßstabsangabe in das Konfigurationssystem eingegeben werden.

Anhand der Maßstabsangabe liegen die Abmessungen des Gefahrenbereichs 2 und dort vorhandener Gegenstände, zu denen auch der Sicherheitssensor 4 gehört, maßstabsgetreu vor.

Damit kann der Benutzer direkt anhand des Fotos (ebenso wie anhand der CAD-Zeichnung gemäß Figur 6) einen Schutzfeldkonturvorschlag erstellen. Das entsprechende Verfahren läuft parallel zum Ausführungsbeispiel gemäß Figur 6 ab. Insbesondere können auch wieder Bereichsmarkierungen 32 verwendet werden, wobei diese im vorliegenden Fall Kontrastlinien 36 markieren, aus welcher Schutzfeldkonturvorschläge abgeleitet werden.

Das weitere Verfahren zur Konfigurierung des Schutzfelds 7 erfolgt analog zur Ausführungsform gemäß Figur 6.

Figur 8 zeigt ein Beispiel eines winkel- und maßstabsverzerrten Fotos, das als grafische Information in die grafische Zeichenoberfläche 22 eingeblendet ist.

Auch in diesem Foto ist ein Gefahrenbereich 2 mit Schränken 31 und einem Markierungsstreifen 34 auf dem Boden vorhanden.

Um das verzerrte Foto zu entzerren, sind im Foto z.B. Maßstabsangaben 35a-35g enthalten.

Anhand des entzerrten Fotos kann dann eine Konfigurierung eines Schutzfelds 7 analog zur Ausführungsform gemäß Figur 7 durchgeführt werden.

### Bezugszeichenliste

- (1): Überwachungseinrichtung
- (2): Gefahrenbereich
- (3): Anlage
- (4): Sicherheitssensor
- (5): Maschine
- (5'): Maschine
- (6): Schutzzaun
- (7): Schutzfeld
- (8): Konfigurationseinheit
- (9): Datenverbindung
- (9a, b): Schnittstellenmodul
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Sendeeinheit
- (21): Empfangseinheit
- (22): grafische Zeichenoberfläche
- (23): Halle
- (24): Tür
- (25): Notausgang
- (26): Labor
- (27): Tür
- (28): Arbeitsraum
- (29a-e): Bearbeitungsmaschine
- (30): Fördereinrichtung
- (31): Schrank
- (31'): Schrank
- (32): Bereichsmarkierung
- (32'): Bereichsmarkierung
- (33): Hilfslinie
- (34): Markierungsstreifen
- (35): Maßstabsangabe
- (35 a-g): Maßstabsangaben
- (36): Kontrastlinie

- (D): Drehachse
- (O): Objekt

## Patentansprüche

1. Überwachungseinrichtung (1) mit einem Sicherheitssensor (4), der zur Durchführung einer Schutzfeldüberwachung ausgebildet ist, und mit einer Konfigurationseinheit (8) verbunden werden kann, die zur Konfiguration von Schutzfeldern (7) für die mit dem Sicherheitssensor (4) durchgeführte Schutzfeldüberwachung ausgebildet ist, **dadurch gekennzeichnet, dass** die Konfigurationseinheit (8) eine grafische Zeichenoberfläche (22) aufweist, dass in die grafische Zeichenoberfläche (22) eine grafische Information eines Gefahrenbereichs (2), innerhalb dessen ein Schutzfeld (7) konfiguriert werden soll, eingeblendet wird, und dass Elemente der grafischen Information für die Konfiguration des Schutzfelds (7) verwendet werden.

2. Überwachungseinrichtung (1) nach Anspruch 1, **dadurch gekennzeichnet, dass** die grafische Information eine CAD-Darstellung oder ein Foto ist.

3. Überwachungseinrichtung (1) nach einem der Ansprüche 1 oder 2, **dadurch gekennzeichnet, dass** die grafische Information maßstabsgetreu ist.

4. Überwachungseinrichtung (1) nach einem der Ansprüche 1 oder 2, **dadurch gekennzeichnet, dass** bei einer verzerrten grafischen Information in dieser Markierungen mit einem Maßstab enthalten oder eingebbar sind, anhand derer in der Konfigurationseinheit (8) eine Entzerrung der grafischen Information erfolgt.

5. Überwachungseinrichtung (1) nach Anspruch 4, **dadurch gekennzeichnet, dass** mit Markierungen Raumachsen gekennzeichnet sind, anhand derer die verzerrte grafische Information in eine grafische Darstellung in einer Ebene umgerechnet wird.

6. Überwachungseinrichtung (1) nach einem der Ansprüche 1 bis 5, **dadurch gekennzeichnet, dass** an der grafischen Zeichenoberfläche Elemente der grafischen Information markiert werden, wobei markierte Elemente als Schutzfeld-Konturelemente übernommen werden, oder dass aus markierten Elementen Schutzfeld-Konturelemente berechnet werden.

7. Überwachungseinrichtung (1) nach Anspruch 6, **dadurch gekennzeichnet, dass** in einer grafischen Information in Form einer CAD-Darstellung Linienelemente markiert werden und zur Ausbildung von Schutzfeldkonturvorschlägen dienen.

8. Überwachungseinrichtung (1) nach einem der Ansprüche 6 oder 7, **dadurch gekennzeichnet, dass** in einer grafischen Information in Form eines Fotos Kontrastkanten markiert werden und zur Ausbildung von Schutzfeldkonturvorschlägen dienen.

9. Überwachungseinrichtung (1) nach einem der Ansprüche 6 bis 8, **dadurch gekennzeichnet, dass** aus markierten Elementen Polygonzüge und/oder Stützstellen berechnet werden, die zur Berechnung von Schutzfeld-Konturelementen dienen oder Schutzfeld-Konturelemente bilden.

10. Überwachungseinrichtung (1) nach einem der Ansprüche 7 bis 9, **dadurch gekennzeichnet, dass** anhand von Schutzfeld-Konturelementen ein Schutzfeldkonturvorschlag berechnet wird, der an der grafischen Zeichenoberfläche angezeigt wird.

11. Überwachungseinrichtung (1) nach Anspruch 10, **dadurch gekennzeichnet, dass** zur Berechnung eines Schutzfeldkonturvorschlags Messdaten des Sicherheitssensors (4) verwendet werden.

12. Überwachungseinrichtung (1) nach einem der Ansprüche 10 oder 11, **dadurch gekennzeichnet, dass** ein an der grafischen Zeichenoberfläche angezeigter Schutzfeldkonturvorschlag änderbar ist.

13. Überwachungseinrichtung (1) nach Anspruch 12, **dadurch gekennzeichnet, dass** ein an der grafischen Zeichenoberfläche angezeigter Schutzfeldkonturvorschlag durch Eingaben in die Konfigurationseinheit (8) bestätigbar ist, und dass ein bestätigter Schutzfeldkonturvorschlag als Schutzfeld (7) im Sicherheitssensor (4) übernommen wird.

14. Überwachungseinrichtung (1) nach einem der Ansprüche 1 bis 13, **dadurch gekennzeichnet, dass** der Sicherheitssensor (4) von einem Flächendistanzsensor oder einem Kamerasensor gebildet ist.

15. Überwachungseinrichtung (1) nach einem der Ansprüche 1 bis 14, **dadurch gekennzeichnet, dass** die Konfigurationseinheit (8) und der Sicherheitssensor (4) mit einer bidirektionalen, fehlersicheren Datenverbindung (9) verbunden sind.
